(19) Europäisches Patentamt / European Patent Office / Office européen des brevets

(11) **EP 2 140 614 B1**

(12) **FASCICULE DE BREVET EUROPEEN**

(45) Date de publication et mention de la délivrance du brevet:
**01.03.2017 Bulletin 2017/09**

(21) Numéro de dépôt: **08788030.8**

(22) Date de dépôt: **20.03.2008**

(51) Int Cl.:
*H04L 12/18* (2006.01)   *H04L 12/28* (2006.01)
*H04N 7/173* (2011.01)   *H04N 21/236* (2011.01)
*H04N 21/438* (2011.01)   *H04N 21/643* (2011.01)
*H04N 21/845* (2011.01)   *H04L 29/06* (2006.01)

(86) Numéro de dépôt international:
**PCT/FR2008/050488**

(87) Numéro de publication internationale:
**WO 2008/132385 (06.11.2008 Gazette 2008/45)**

(54) **PROCEDE DE MULTIPLEXAGE TEMPOREL ET DE DIFFUSION DE FLUX AUDIOVISUELS, POUR L'AMELIORATION DE QUALITE**

ZEITLICHES MULTIPLEXVERFAHREN SOWIE VERFAHREN ZUR UEBERTRAGUNG VON AUDIO-/VIDEO-DATENFLUESSEN ZUR QUALITÄTSSTEIGERUNG

METHOD FOR TIME MULTIPLEXING AND FOR BROADCASTING AUDIOVISUAL STREAMS, IN ORDER TO IMPROVE QUALITY

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **27.03.2007 FR 0754067**

(43) Date de publication de la demande:
**06.01.2010 Bulletin 2010/01**

(73) Titulaire: **Orange**
**75015 Paris (FR)**

(72) Inventeurs:
• **MENAI, Mohamed-Fouz**
**F-22300 Ploulec'h (FR)**
• **FIEAU, Frédéric**
**F-22700 Perros-Guirec (FR)**

(74) Mandataire: **Delumeau, François Guy et al**
**Cabinet Beau de Loménie**
**158, rue de l'Université**
**75340 Paris Cedex 07 (FR)**

(56) Documents cités:
**EP-A- 1 601 199    US-A1- 2003 053 476**

• **CHUNGLAE CHO ET AL: "Improvement of channel zapping time in IPTV services using the adjacent groups join-leave method" ADVANCED COMMUNICATION TECHNOLOGY, 2004. THE 6TH INTERNATIONAL CONFERENCE ON PHOENIX PARK, KOREA FEB. 9-11, 2004, PISCATAWAY, NJ, USA,IEEE, vol. 2, 9 février 2004 (2004-02-09), pages 971-975, XP010702946 ISBN: 89-5519-119-7**

## Description

Arrière-plan de l'invention

L'invention se situe dans le domaine de la diffusion de flux de données dans les réseaux de télécommunication.

Elle trouve une application privilégiée mais non limitative dans la diffusion des programmes audiovisuels dans les réseaux de transport IP (Internet protocole).

La diffusion de programmes audiovisuels dans les réseaux IP sont conformes à une architecture connue sous l'acronyme « IPTV » qui utilise les mécanismes de « streaming » et de diffusion « multicast ».

On rappelle que le « streaming » est un mécanisme permettant de transporter un flux de données d'une source vers une destination de manière continue, le flux étant traité au fil de l'eau par cette dernière sans qu'elle ait besoin de le stocker dans son intégralité.

Dans une architecture IPTV, un flux est constitué par une suite de paquets IP transportant un contenu audiovisuel. Ces paquets sont envoyés par la source dans le même ordre chronologique que les données multimédia qu'ils transportent.

On rappelle également que le « multicast » est un mode de diffusion à travers un réseau de transport permettant d'organiser et d'optimiser l'envoi d'un même flux de données d'une source vers une pluralité de destinations.

Pour un accès DSL (en anglais « Digital Subscriber Line »), le mécanisme de changement de flux est mis en oeuvre par le protocole IGMP (Internet Group Management Protocol), protocole permettant de gérer l'abonnement et le désabonnement à un group multicast.

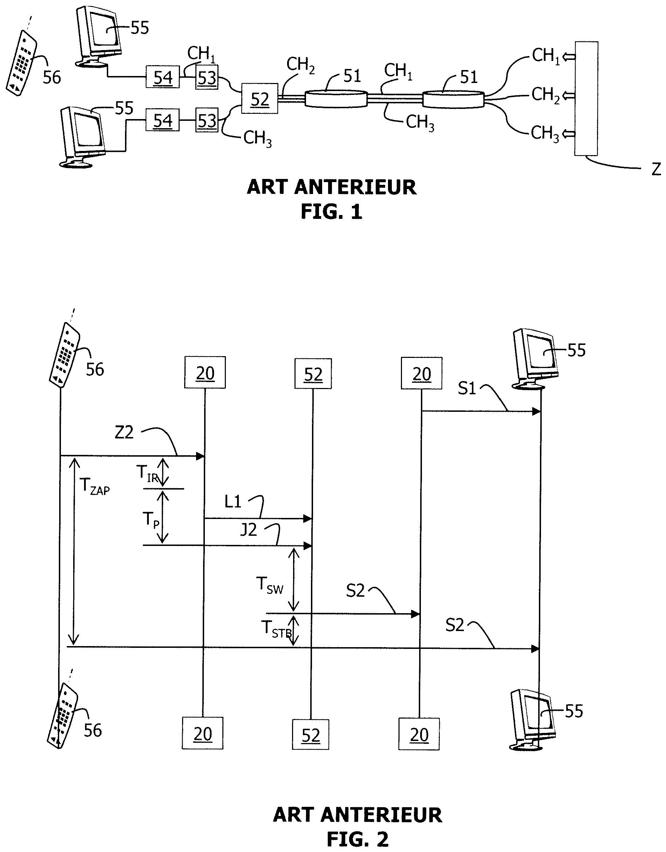

A titre d'exemple, on a représenté à la **figure 1** un réseau IPTV dans lequel une source Z diffuse trois flux $CH_1$, $CH_2$, $CH_3$ vers deux destinations constituées par des set-top box 54, associées à des téléviseurs 55.

Dans cet exemple, chacune des set-top box 54 est connectée à un équipement DSLAM (entité d'accès DSL) 52 par l'intermédiaire d'une passerelle résidentielle 53.

Le DSLAM 52 est l'équipement réseau le plus proche de l'utilisateur, autrement dit le dernier noeud IP de l'opérateur recevant une partie des flux audiovisuels. Il est connecté à la source Z par l'intermédiaire d'une pluralité de routeurs 51.

L'utilisateur, à l'aide d'une télécommande 56 peut de façon connue choisir le programme audiovisuel qu'il souhaite recevoir sur son téléviseur 55. A la figure 1, les téléviseurs 55 reçoivent respectivement les programmes audiovisuels portés par les flux $CH_1$ et $CH_3$.

Dans le réseau de transport, chaque flux $CH_i$ est identifié par un groupe multicast et la source Z. Un noeud IP (et notamment le DSLAM 52) souhaitant recevoir un programme audiovisuel donné doit s'abonner au groupe correspondant.

Concrètement, lorsque l'utilisateur manifeste sa volonté de changer de programme audiovisuel par l'intermédiaire de la télécommande 56, cela se traduit dans la set-top box 54, au niveau protocolaire par :

- l'envoi d'un premier message « IGMP Leave » au DSLAM 52 pour se désabonner du groupe multicast de diffusion du flux actuel ; et par
- l'envoi d'un deuxième message « IGMP Join » au DSLAM 52 pour s'abonner au groupe multicast de diffusion du flux désiré.

Au niveau de la set-top box 54 de l'utilisateur, le processus de changement de chaîne consiste notamment à :

- décoder le message infrarouge émis par la télécommande 56 ;
- préparer les messages « IGMP Leave » et « IGMP Join » ;
- envoyer ces messages au DSLAM 52 ; et
- réceptionner le nouveau flux.

Sur réception d'un flux, la set-top box 54 effectue en outre les opérations suivantes :

- enregistrement des paquets IP dans une mémoire de type FIFO (First In First Out) des paquets IP constitutifs du flux ;
- extraction des données multimédia contenues dans les paquets IP par désencapsulation ;
- déchiffrement des données ;
- décodage des données pour restitution sur le téléviseur 55.

De façon connue la perte ou la corruption de paquets IP est un problème assez fréquent dans les réseaux IPTV, la perte d'un paquet pouvant notamment être due à la rupture ou à la dégradation du lien réseau entre la source et l'équipement DSLAM 52 ou à un problème de contention au niveau d'un ou de plusieurs noeuds du réseau.

La perte de paquet se traduit pour l'utilisateur par une image dégradée ou bloquée.

Cet effet désagréable doit autant que possible être évité.

Un procédé de diffusion de flux mettant en oeuvre un schéma de multiplexage et démultiplexage temporels, connu de l'art antérieur, est illustré dans la demande de brevet US2003/0053476 A1.

Objet et résumé de l'invention

Selon un premier aspect, l'invention concerne un procédé de diffusion d'au moins deux flux de données, dits « flux primaires », dans un réseau de télécommunications entre une source et au moins une destination. Ce procédé comporte :

- une étape de découpage temporel de chacun des flux primaires en une pluralité de sections par la source ;
- une étape de répartition de toutes ces sections dans un ensemble de flux dits « secondaires » en nombre égal au nombre des flux primaires, chacun des flux secondaires étant obtenu par multiplexage temporel des sections prises séquentiellement et cycliquement dans chacun des flux primaires ; et
- une étape de diffusion des flux secondaires vers la ou les destinations.

Corrélativement, l'invention vise aussi un dispositif de diffusion d'au moins deux flux de données, dits « flux primaires », dans un réseau de télécommunications vers au moins une destination. Ce dispositif comporte :

- des moyens de découpage temporel de chacun des flux primaires en une pluralité de sections ;
- des moyens de répartition de toutes ces sections dans un ensemble de flux dits « secondaires » en nombre égal au nombre de flux primaires, chacun des flux secondaires étant obtenu par multiplexage temporel de ces sections prises séquentiellement et cycliquement dans chacun des flux primaires ; et
- des moyens de diffusion des flux secondaires vers la ou les destinations.

Selon un deuxième aspect, l'invention concerne un procédé de traitement d'au moins un flux de données dit « primaire », ce procédé comportant une étape préalable de reconstitution de ce flux primaire à partir d'une séquence de sections extraites par démultiplexage temporel d'au moins deux flux de données dits « secondaires » pris cycliquement.

Corrélativement, l'invention vise aussi un dispositif de traitement d'au moins un flux de données dit « primaire », ce dispositif comportant des moyens de reconstitution de ce flux primaire à partir d'une séquence de sections extraites par démultiplexage temporel d'au moins deux flux de données dits « secondaires » pris cycliquement.

Dans un mode particulier de réalisation, au moins un des flux primaires est un programme audiovisuel, le traitement de ce flux par le dispositif de traitement selon l'invention consistant à restituer ce programme sur un équipement adapté, par exemple un téléviseur.

Conformément à l'invention ces flux audiovisuels (c'est-à-dire primaires) sont découpés temporellement et transportés vers les destinataires dans plusieurs flux secondaires.

Autrement dit, si on se place du point de vue du destinataire, les paquets de données multimédia constituant un programme audiovisuel donné sont extraits de plusieurs flux secondaires.

Aussi, si un lien réseau sur lequel un flux secondaire est transporté est rompu ou endommagé, les paquets de ce flux correspondant à ce programme audiovisuel seront perdus, mais les paquets de ce même programme véhiculés dans un autre flux secondaire sont correctement reçus par le destinataire.

En conséquence, si l'invention ne permet pas de diminuer la perte globale de paquets, elle permet très avantageusement de répartir cette perte sur plusieurs programmes audiovisuels, de sorte que pour l'utilisateur qui ne visualise qu'un seul programme, les effets de cette perte sont beaucoup moins gênants.

De façon avantageuse, les nombres de flux primaires et secondaires étant égaux, la bande passante utilisée pour transporter les flux secondaires conformément à l'invention est égale à la bande passante qui aurait été nécessaire pour transporter les flux primaires sans la mise en oeuvre de l'invention.

On obtient ainsi une qualité de réception fortement améliorée sans introduire de redondance ni de messages de contrôle.

Avantageusement, le procédé de diffusion découpe les flux primaires en une pluralité de sections de même durée. Ainsi, la restitution d'un programme audiovisuel se fait en extrayant séquentiellement et cycliquement une section de ce programme de chaque flux secondaire, sans délai de réception et de traitement entre deux sections successives.

Une telle durée est avantageusement choisie la plus courte possible. Un avantage est de limiter l'impact d'une perte de données relatives à un programme audiovisuel sur la perception de qualité ressentie par l'utilisateur final lorsqu'il visualise ce programme.

Dans un mode particulier de réalisation, l'invention est mise en oeuvre dans un réseau IPTV, le mécanisme de changement de flux étant mis en oeuvre par le protocole IGMP.

Dans ce mode de réalisation, le procédé de traitement selon l'invention comporte :

- préalablement à chaque extraction d'une section d'un flux secondaire, une étape d'abonnement à un groupe de diffusion de ce flux dans un réseau de télécommunications et une étape de réception de ce flux ; et
- après l'extraction, une étape de désabonnement à ce groupe de diffusion.

En référence à la **figure 2,** nous allons maintenant illustrer un autre problème connu dans les réseaux IPTV.

Sur cette figure, on a représenté le temps $T_{ZAP}$ de changement de chaîne (ou « zapping »), à savoir le décalage temporel entre l'instant où l'utilisateur actionne la télécommande 56 pour demander le changement de programme audiovisuel et l'instant à partir duquel il reçoit son programme sur son téléviseur.

Nous supposerons (flèche S1) que la set-top box 54 délivre un flux CH1 au téléviseur 55 lorsque la télécommande 56 est actionnée et envoie (flèche Z2) à la set-top box 54 pour demander la réception du flux CH2.

Nous appellerons $T_{IR}$ le décalage temporel nécessaire à la set-top box 54 pour décoder le message infra rouge émis par la télécommande 56.

Comme décrit précédemment, le changement de chaîne nécessite l'envoi d'un message L1 (IGMP Leave) de désabonnement au flux CH1 et l'envoi d'un message J2 (IGMP Join) d'abonnement au flux CH2.

Nous appellerons :

- $T_P$ le décalage temporel nécessaire à la préparation de ces deux messages L1 et J2 ; et
- $T_{SW}$ le décalage temporel nécessaire à la réception du flux CH2 (flèche S2) suite à l'envoi du message J2 ;
- $T_{STB}$ le temps nécessaire au décodage d'un flux multimédia avant la restitution du contenu qu'il transporte par le téléviseur 55.

Selon cette terminologie : $T_{ZAP} = T_{IR} + T_P + T_{SW} + T_{STB}$.

On observe par expérience que le temps de zapping TZAP est généralement perçu comme étant excessif.

Dans un mode particulier de réalisation de l'invention dans lequel toutes les sections ont la même durée $T_{MUX}$, le temps de zapping peut dans certaines conditions être avantageusement réduit et devenir indépendant des durées TP et TSW liées au mécanisme réseau.

Dans ce mode de réalisation, le procédé de traitement selon l'invention extrait les sections périodiquement des flux secondaires.

Dans un mode particulier de réalisation, les différentes étapes du procédé de diffusion sont déterminées par des instructions de programmes d'ordinateurs.

En conséquence, l'invention vise aussi un programme d'ordinateur sur un support d'informations, ce programme étant susceptible d'être mis en oeuvre dans un dispositif de diffusion, une source de programmes audiovisuels, ou plus généralement dans un ordinateur, ce programme comportant des instructions adaptées à la mise en oeuvre des étapes d'un procédé de diffusion tel que décrit ci-dessus.

Dans un mode particulier de réalisation, les différentes étapes du procédé de traitement sont déterminées par des instructions de programmes d'ordinateurs.

En conséquence, l'invention vise aussi un programme d'ordinateur sur un support d'informations, ce programme étant susceptible d'être mis en oeuvre dans un dispositif de traitement, ou plus généralement dans un ordinateur, ce programme comportant des instructions adaptées à la mise en oeuvre des étapes d'un procédé de traitement tel que décrit ci-dessus.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Un programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 déjà décrite représente un réseau IPTV de l'état de la technique ;
- la figure 2 déjà décrite représente le temps de zapping dans le réseau IPTV de la figure 1 ;
- la figure 3 représente un dispositif de diffusion et un dispositif de traitement conformes à l'invention dans un mode particulier de réalisation ;
- la figure 4 représente un exemple de multiplexage temporel au sens de l'invention ;
- la figure 5 représente sous forme d'organigramme les principales étapes d'un procédé de diffusion conforme à l'invention dans un mode particulier de réalisation ;
- la figure 6 représente sous forme d'organigramme les principales étapes d'un procédé de traitement conforme à l'invention dans un mode particulier de réalisation ;
- la figure 7 illustre les latences temporelles dans la restitution d'un programme audiovisuel dans un exemple de mise en oeuvre de l'invention ;
- la figure 8 illustre les latences temporelles dans le cas d'un changement de programme audiovisuel dans un exemple de mise en oeuvre de l'invention ; et
- la figure 9 représente les effets d'une perte de paquets dans un flux secondaire selon l'invention.

Description détaillée d'un mode de réalisation

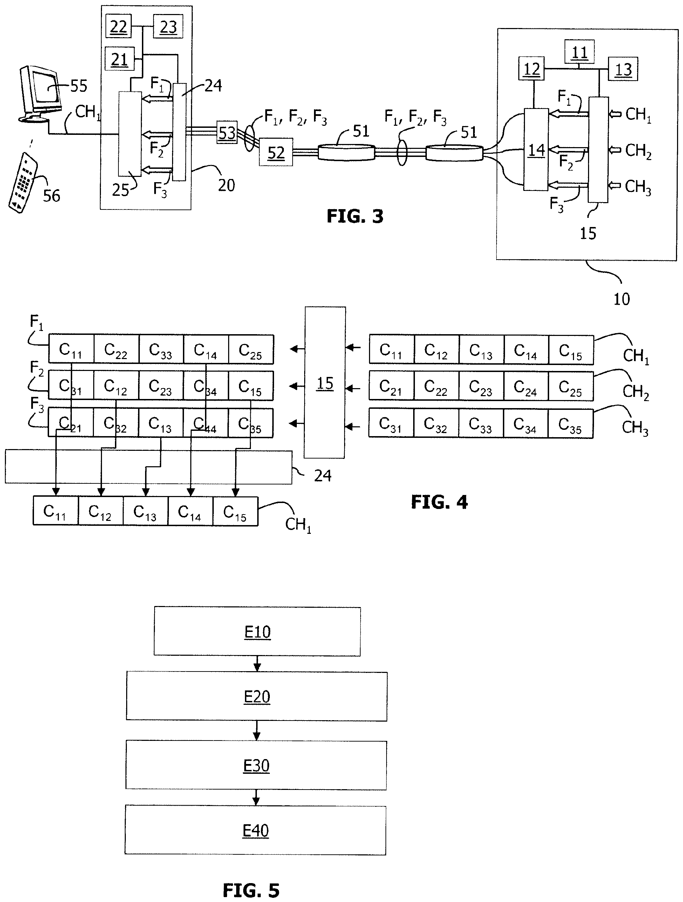

La **figure 3** représente un dispositif de diffusion 10 conforme à l'invention et un dispositif de traitement 20 conforme à l'invention dans leur environnement.

On suppose dans cet exemple que le dispositif 10 de diffusion, ou source, diffuse trois programmes audiovisuels $CH_1$, $CH_2$, $CH_3$.

Dans l'exemple de réalisation décrit ici, le dispositif de traitement 20 selon l'invention est une set-top box.

Chacun de ces programmes audiovisuels $CH_i$ constitue un flux de données primaires au sens de l'invention.

Conformément à l'invention, la source 10 effectue un découpage temporel de chacun de ces flux primaire $CH_i$ en une pluralité de sections $C_{ik}$.

Dans l'exemple de réalisation décrit ici, la source 10 a l'architecture conventionnelle d'un ordinateur.

Elle comporte notamment un processeur 11, une mémoire morte de type ROM 12, une mémoire vive de type RAM 13 et des moyens de télécommunication 14.

La mémoire morte de type ROM 12 constitue un support d'enregistrement pour un programme d'ordinateur conforme à l'invention, ce programme comportant des instructions pour l'exécution des étapes d'un procédé de diffusion conforme à l'invention dont l'organigramme est donné à la figure 5.

Conformément à l'invention, le dispositif de diffusion 10 comporte des moyens 15 pour effectuer le découpage temporel des flux primaires $CH_i$.

Ce découpage temporel est illustré à la **figure 4.**

Dans l'exemple décrit ici, chacun des flux primaires $CH_i$ est divisé en cinq sections $C_{i1}$ à $C_{i5}$.

Les moyens 15 de découpage temporel sont également adaptés à répartir les sections $C_{1i}$, $C_{2j}$, $C_{3k}$ de ces trois flux primaires de façon séquentielle et cyclique dans trois flux secondaires référencés $F_1$ à $F_3$.

Les moyens 14 de diffusion de la source 10 sont adaptés à diffuser ces flux secondaires dans le réseau.

Ces flux sont acheminés par des routeurs 51 jusqu'à l'équipement DSLAM 52.

Ils sont reçus, via une passerelle domestique 53, par la set-top box 20 conforme à l'invention.

Dans l'exemple décrit, la set-top box 20 conforme à l'invention a l'architecture conventionnelle d'un ordinateur.

Elle comporte notamment un processeur 21, une mémoire morte de type ROM 22, une mémoire vive de type RAM 23 et des moyens de télécommunication 24.

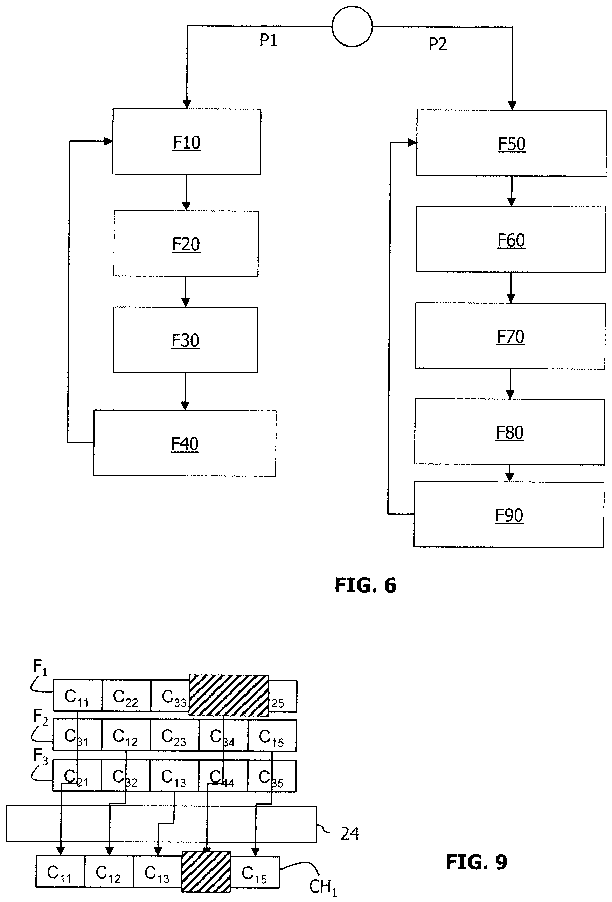

La mémoire morte de type ROM 22 constitue un support d'enregistrement pour un programme d'ordinateur conforme à l'invention, ce programme comportant des instructions pour l'exécution des étapes d'un procédé de traitement conforme à l'invention dont l'organigramme est donné à la figure 6.

Conformément à l'invention, la set-top box 20 comporte également des moyens 25 pour reconstituer un flux primaire à partir d'une séquence de sections extraites par démultiplexage temporel des flux secondaires $F_1$ à $F_3$ pris cycliquement.

Les moyens de télécommunication 24 sont en particulier adaptés à recevoir les flux secondaires $F_i$ et à les transmettre aux moyens 25 de reconstitution.

Dans l'exemple de la figure 3, le dispositif 20 de traitement reconstitue ainsi le flux $CH_1$, comme illustré à la figure 4.

Plus précisément, le flux primaire $CH_1$ est obtenu en extrayant les sections $C_{1i}$ des flux $F_1$ à $F_3$.

Une fois le flux primaire $CH_1$ reconstitué le programme audiovisuel transporté par ce flux est visualisé sur le téléviseur 55.

On notera que l'invention ne se limite pas au cas où le procédé de traitement est mis en oeuvre par la set top box 20, qu'il peut, plus généralement, être mis en oeuvre par tout équipement du réseau placé en coupure des flux secondaires, par exemple l'équipement DSLAM 52.

En référence à la **figure 5,** nous allons maintenant décrire les principales étapes du procédé de diffusion mis en oeuvre par la source 10.

Au cours d'une étape E10, la source 10 obtient les flux primaires $CH_1$ à $CH_3$.

Puis elle découpe ces flux primaires en sections au cours d'une étape E20, comme décrit en référence à la figure 4.

Au cours d'une étape E30, ces sections sont distribuées de façon séquentielle et cyclique dans les flux secondaires $F_1$ à $F_3$, puis diffusés au cours d'une étape E40 vers un ou plusieurs destinataires.

En référence à la **figure 6,** nous allons maintenant décrire les principales étapes du procédé de traitement mis en oeuvre par la set-top box 20.

Dans l'exemple décrit ici, ce procédé met en oeuvre deux processus, à savoir :

- un processus P1 de reconstitution d'un flux primaire à partir des flux secondaires et de mémorisation des paquets IP extraites de ce flux primaire dans une mémoire FIFO localisée dans la mémoire vive 23 ; et

- un processus P2 de restitution du programme audiovisuel sur le téléviseur 55.

Le processus P1 se compose principalement d'une boucle pour traiter les flux secondaires $F_1$ à $F_3$ cycliquement et extraire de ces flux les sections préalablement obtenues par découpage temporel.

Plus précisément, cette boucle comporte une étape F10 au cours de laquelle la set-top box 20 s'abonne à un groupe de diffusion d'un flux secondaire.

Puis, au cours d'une étape F20 les moyens de reconstitution 25 extraient par démultiplexage temporel la prochaine section de ce flux.

Cette section est mémorisée au cours d'une étape F30 dans la mémoire FIFO.

Au cours d'une étape F40 la set top box 20 se désabonne du flux en cours puis, à l'étape F10 déjà décrite, s'abonne au groupe de diffusion du flux secondaire suivant.

Dans l'exemple de réalisation décrit ici, les sections ont toutes une durée $T_{MUX}$ et la set-top box 20 respecte cette durée entre le traitement de deux flux secondaires $F_i$, $F_{i+1}$, consécutifs dans la boucle.

Ainsi, par la mise en oeuvre de cette boucle, les sections correspondantes à un flux primaire sont mémorisées séquentiellement dans la mémoire FIFO.

Le processus P2 comporte une étape F50 au cours de laquelle il attend qu'une quantité de données suffisante soit mémorisée dans la mémoire FIFO.

Puis, au cours d'une étape F60 les paquets IP sont désencapsulés afin d'en extraire les données multimédia. Dans l'exemple de réalisation décrit ici, les données multimédia sont multiplexées par la source 10 suivant le format MPEG2/TS avant d'être encapsulées dans des paquets UDP/IP.

Au cours d'une étape F70, la set-top box 20 déchiffre ou désembrouille ces données si elles ont été chiffrées ou embrouillées avant diffusion.

Au cours d'une étape F80, les données sont décodées, en l'espèce du format MPEG2/TS en un format compatible avec le téléviseur 55 (RGB, Composite, S-Video).

Le programme audiovisuel est alors restitué au cours d'une étape F90 sur le téléviseur 55.

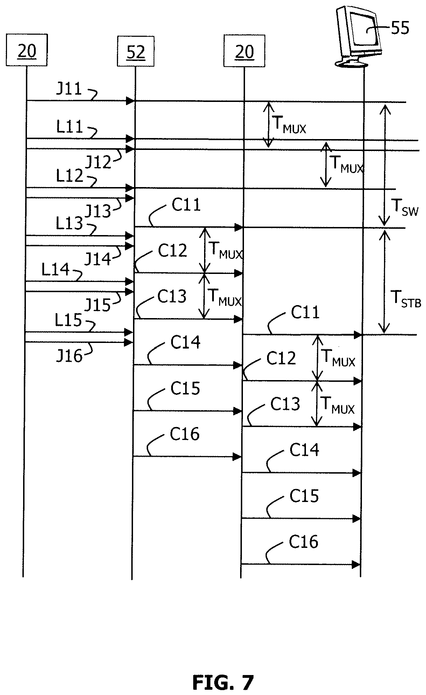

La **figure 7** illustre les temps de latence temporelle dans la restitution du programme audiovisuel.

Comme décrit précédemment, la set-top box 20 conforme à l'invention, envoie, au cours des étapes F10 des commandes IGMP Join pour s'abonner aux groupes de diffusion des flux secondaires, et au cours des étapes F40 des commandes IGMP Leave pour se désabonner de ces groupes.

A la figure 7, on utilise les notations Cij, Jij et Lij pour représenter respectivement les sections, l'envoi des messages IGMP Join et l'envoi des messages IGMP Leave, où i compris entre 1 et 3 correspond à l'indice du flux $F_i$ et j correspond au numéro séquentiel de la section dans ce flux.

Dans l'exemple décrit ici, les sections $C_{ij}$ ont toutes la même durée $T_{MUX}$. En conséquence, la durée qui s'écoule entre l'envoi de deux commandes IGMP Join (respectivement IGMP Leave) successives est égale à cette durée $T_{MUX}$.

De façon avantageuse, on choisit la durée $T_{MUX}$ la plus courte possible, en respectant une contrainte de durée minimale liée à une capacité de traitement de requêtes IGMP successives par un équipement DSLAM.

Comme précédemment on définit $T_{SW}$ comme étant le décalage temporel nécessaire à la réception d'un flux suite à l'envoi d'un message d'abonnement au groupe multicast de diffusion de ce flux.

Par exemple, la durée $T_{SW}$ est égale au temps qui sépare l'émission de la commande J11 et la réception de la section C11 dans le flux secondaire F1.

De même, $T_{STB}$ représente le temps nécessaire au décodage d'un flux multimédia avant la restitution du contenu qu'il transporte par le téléviseur 55.

Ce temps est notamment le temps qui s'écoule entre la réception de la section C11 et la restitution des données du programme audiovisuel CH1 comprises dans cette section.

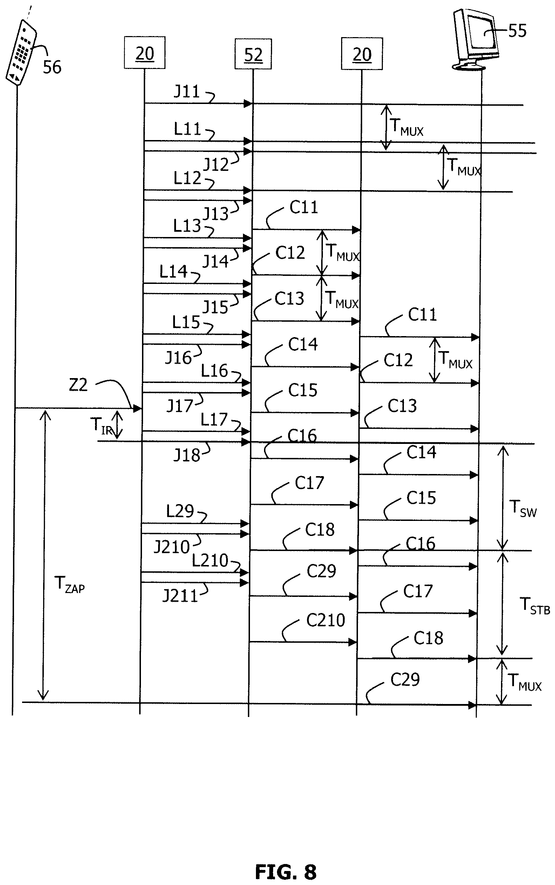

La **figure 8** illustre les latences temporelles dans le cas du zapping dit « incrémental », lorsque l'invention est mise en oeuvre.

Dans ce document on définit le zapping incrémental comme celui effectué par l'appui sur la touche « + » sur la télécommande 56 pour passer à la chaîne suivante.

Dans un flux secondaire donné, la section d'un programme audiovisuel i est temporellement suivie par la section du programme audiovisuel suivant i+1.

Conformément à l'invention, si l'utilisateur effectue un zapping incrémental de la chaîne i vers la chaîne i+1, la set-top box 20 attend la réception de la section correspondante à la chaîne i+1, arrêtant par conséquence l'envoi des requêtes IGMP Leave et IGMP Join.

Dans l'exemple de la figure 8, nous considérons que l'utilisateur qui regarde le programme audiovisuel $CH_1$ appuie sur la touche « + » de la télécommande 56 pour demander la restitution du programme audiovisuel $CH_2$ (flèche Z2).

Comme décrit précédemment, l'analyse du signal infra rouge émis par la télécommande 56 nécessite la durée $T_{IR}$.

Cette action bloque temporairement empêche l'envoi des messages de désabonnement IGMP Leave et d'abonnement IGMP Join.

Plus précisément, la set-top box 20 selon l'invention amorce un basculement du processus d'abonnements successifs pour recevoir le programme audiovisuel suivant $CH_2$ décalé dans le temps de $2T_{MUX}$, par rapport au dernier message IGMP correspondant à la dernière section du programme audiovisuel $CH_1$.

Il apparaît sur cette figure que le temps de zapping $T_{ZAP}$ est :

$$T_{ZAP} = T_{IR} + T_{SW} + T_{STB} + T_{MUX}.$$

On réduit ainsi le temps de zapping de la durée $T_P - T_{MUX}$, lorsque la durée $T_{MUX}$ est inférieure à la durée $T_P$ (décalage temporel nécessaire à la préparation de deux messages IGMP Leave et IGMP Join).

Une des contraintes à prendre en compte pour la mise en oeuvre de l'invention est la fréquence des requêtes IGMP envoyées à l'équipement DSLAM 52. Ce nombre de requêtes dépend de la durée des sections $T_{MUX}$. Si la fréquence de ces requêtes est élevée, et le nombre de destinataires géré par cet équipement DSLAM important, il faut s'assurer que l'équipement DSLAM 52 a la capacité de traiter ces requêtes dans le temps imparti pour éviter la coupure de flux.

$T_{MUX}$ peut être choisi égal à 50 ms.

En pratique $T_P$ est de l'ordre de 170ms.

Dans ces conditions, l'invention permet de réduire la durée de zapping $T_{ZAP}$ d'environ 120 ms.

La **figure 9** représente les effets d'une perte de paquets dans le flux secondaire $F_1$ de la figure 4.

On suppose que lors de la transmission du flux F1 dans le réseau, les sections $C_{33}$, $C_{14}$ et $C_{25}$ sont endommagées.

On comprend que seule la perte de la section $C_{14}$ a une conséquence sur la qualité du flux $CH_1$ visualisé par l'utilisateur, puisque les sections C33 et C25 concernent les autres programmes audiovisuels $CH_3$ et $CH_2$.

**Revendications**

1. Procédé de diffusion d'au moins deux flux de données ($CH_1$, $CH_2$, $CH_3$), dits « flux primaires », dans un réseau de télécommunications entre une source (10) et au moins une destination (20), **caractérisé en ce qu'**il comporte :

    - une étape (E20) de découpage temporel de chacun desdits flux primaires ($CH_1$, $CH_2$, $CH_3$) en une pluralité de sections ($C_{1i}$, $C_{2j}$, $C_{3k}$) de même durée ($T_{MUX}$) par ladite source (10) ;
    - une étape (E30) de répartition de toutes lesdites sections ($C_{1i}$, $C_{2j}$, $C_{3k}$) dans un ensemble de flux dits « secondaires » ($F_1$, $F_2$, $F_3$) en nombre égal au nombre desdits flux primaires, chacun desdits flux secondaires étant obtenu par multiplexage temporel desdites sections prises séquentiellement et cycliquement dans chacun desdits flux primaires ($CH_1$, $CH_2$, $CH_3$) ; et
    - une étape (E40) de diffusion desdits flux secondaires ($F_1$, $F_2$, $F_3$) vers ladite destination (20).

2. Procédé de diffusion selon la revendication 1, **caractérisé en ce que** ladite durée ($T_{MUX}$) n'est pas inférieure à un temps de traitement de requêtes successives d'abonnement et désabonnement à un groupe de diffusion d'un desdits flux secondaires par un équipement du réseau placé en coupure desdits flux de données.

3. Procédé de traitement d'au moins un flux de données dit « primaire » ($CH_1$), **caractérisé en ce qu'**il comporte une étape (F40) préalable de reconstitution dudit flux primaire ($CH_1$) à partir d'une séquence de sections ($C_{1i}$) de même durée ($T_{MUX}$) extraites (F30) par démultiplexage temporel d'au moins deux flux de données dits « secondaires » (F1, F2, F3) pris cycliquement.

4. Procédé de traitement selon la revendication 3, **caractérisé en ce que** lesdites sections ($C_{1i}$) sont extraites (F30) périodiquement desdits flux secondaires ($F_1$, $F_2$, $F_3$).

5. Procédé de traitement, selon l'une des revendications 3 ou 4, **caractérisé en ce que** ledit flux primaire est un programme audiovisuel, et **en ce que** ledit traitement (F80-F100) consiste à restituer ce programme sur un équipement adapté.

6. Procédé de traitement selon la revendication 5, **caractérisé en ce qu'**il comporte :

    - préalablement à chaque extraction (F30) d'une section d'un flux secondaire ($F_1$, $F_2$, $F_3$), une étape (F10) d'abonnement à un groupe de diffusion de ce flux dans un réseau de télécommunications et une étape (F20) de réception de ce flux ; et
    - après ladite d'extraction (F30), une étape (F40) de désabonnement audit groupe de diffusion.

7. Dispositif de diffusion d'au moins deux flux de données ($CH_1$, $CH_2$, $CH_3$), dits « flux primaires », dans un réseau de télécommunications vers moins une destination (20), **caractérisé en ce qu'**il comporte :

    - des moyens (15) de découpage temporel de chacun desdits flux primaires ($CH_1$, $CH_2$, $CH_3$) en une pluralité de sections ($C_{1i}$, $C_{2j}$, $C_{3k}$) de même durée ($T_{MUX}$);
    - des moyens (15) de répartition de toutes lesdites sections ($C_{1i}$, $C_{2j}$, $C_{3k}$) dans un ensemble de flux dits « secondaires » ($F_1$, $F_2$, $F_3$) en nombre égal au nombre desdits flux primaires, chacun desdits flux secondaires étant obtenu par multiplexage temporel desdites sections prises séquentiellement et cycliquement dans chacun desdits flux primaires ($CH_1$, $CH_2$, $CH_3$) ; et
    - des moyens (14) de diffusion desdits flux secondaires ($F_1$, $F_2$, $F_3$) vers ladite destination (20).

8. Dispositif de traitement d'au moins un flux de données dit « primaire » ($CH_1$), **caractérisé en ce qu'**il comporte des moyens (25) de reconstitution dudit flux primaire ($CH_1$) à partir d'une séquence de sections ($C_{1i}$) de même durée ($T_{MUX}$) extraites par démultiplexage temporel d'au moins deux flux de données dits « secondaires » ($F_1$, $F_2$, $F_3$) pris cycliquement.

9. Programme d'ordinateur comportant des instructions pour l'exécution des étapes du procédé de diffusion selon la revendication 1 ou 2 lorsque ledit programme est exécuté par un ordinateur (10).

10. Support d'enregistrement (12) lisible par un ordinateur (10) sur lequel est enregistré un programme d'ordinateur comprenant des instructions pour l'exécution des étapes du procédé de diffusion selon la revendication 1 ou 2.

11. Programme d'ordinateur comportant des instructions pour l'exécution des étapes du procédé de traitement selon l'une quelconque des revendications 3 à 6 lorsque ledit programme est exécuté par un ordinateur (20).

12. Support d'enregistrement (22) lisible par un ordinateur (20) sur lequel est enregistré un programme d'ordinateur comprenant des instructions pour l'exécution des étapes du procédé de traitement selon l'une quelconque des revendications 3 à 6.

**Patentansprüche**

1. Verfahren zum Aussenden wenigstens zweier Datenströme ($CH_1$, $CH_2$, $CH_3$), die "Primärströme" genannt werden, in einem Telekommunikationsnetz zwischen einer Quelle (10) und wenigstens einem Ziel (20), **dadurch gekennzeichnet, dass** es Folgendes umfasst:

    - einen Schritt (E20) des zeitlichen Unterteilens jedes der Primärströme ($CH_1$, $CH_2$, $CH_3$) in mehrere Sektionen ($C_{1i}$, $C_{2j}$, $C_{3k}$) mit derselben Dauer ($T_{MUX}$) durch die Quelle (10);
    - einen Schritt (E30) des Verteilens sämtlicher Sektionen ($C_{1i}$, $C_{2j}$, $C_{3k}$) auf eine Gesamtheit sogenannter "sekundärer" Ströme ($F_1$, $F_2$, $F_3$) einer Anzahl, die gleich der Anzahl der Primärströme ist, wobei die Sekundärströme durch zeitliches Multiplexieren der Sektionen, die sequentiell und zyklisch in jedem der Primärströme ($CH_1$, $CH_2$, $CH_3$) abgegriffen werden, erhalten werden; und
    - einen Schritt (E40) des Aussendens der Sekundärströme ($F_1$, $F_2$, $F_3$) zu dem Ziel (20).

2. Aussendeverfahren nach Anspruch 1, **dadurch gekennzeichnet, dass** die Dauer ($T_{MUX}$) nicht kleiner ist als eine Zeit für die Verarbeitung aufeinander folgender Abonnierungs- und Deabonnierungsanforderungen einer Aussendegruppe eines der Sekundärströme durch ein Netzgerät, das abgetrennt von den Datenströmen angeordnet ist.

3. Verfahren zum Verarbeiten wenigstens eines sogenannten "primären" Datenstroms ($CH_1$), **dadurch gekennzeichnet, dass** es einen vorhergehenden Schritt (F40) des Wiederherstellens des Primärstroms ($CH_1$) anhand einer Folge von Sektionen ($C_{1i}$) derselben Dauer ($T_{MUX}$), die durch zeitliches Demultiplexieren wenigstens zweier sogenannter "sekundärer" Datenströme (F1, F2, F3), die zyklisch abgegriffen werden, extrahiert (F30) werden, umfasst.

4. Verarbeitungsverfahren nach Anspruch 3, **dadurch gekennzeichnet, dass** die Abschnitte ($C_{1i}$) aus Sekundärströmen ($F_1$, $F_2$, $F_3$) periodisch extrahiert (F30) werden.

5. Verarbeitungsverfahren nach einem der Ansprüche 3 oder 4, **dadurch gekennzeichnet, dass** der Primärstrom ein audiovisuelles Programm ist und dass die Verarbeitung (F80-F100) darin besteht, dieses Programm in einem geeigneten Gerät wiederherzustellen.

6. Verarbeitungsverfahren nach Anspruch 5, **dadurch gekennzeichnet, dass** es Folgendes umfasst:

    - vor jeder Extraktion (F30) einer Sektion eines Sekundärstroms ($F_1$, $F_2$, $F_3$) einen Schritt (F10) des Abonnierens einer Aussendegruppe dieses Stroms in einem Telekommunikationsnetz und einen Schritt (F20) des Empfangens dieses Stroms; und
    - nach der Extraktion (F30) einen Schritt (F40) des Deabonnierens der Aussendegruppe.

7. Vorrichtung zum Aussenden wenigstens zweier Datenströme ($CH_1$, $CH_2$, $CH_3$), die "Primärströme" genannt werden, in einem Telekommunikationsnetz zu wenigstens einem Ziel (20), **dadurch gekennzeichnet, dass** sie Folgendes umfasst:

    - Mittel (15) zum zeitlichen Unterteilen jedes der Primärströme ($CH_1$, $CH_2$, $CH_3$) in mehrere Sektionen ($C_{1i}$, $C_{2j}$, $C_{3k}$) derselben Dauer ($T_{MUX}$);
    - Mittel (15) zum Verteilen sämtlicher Sektionen ($C_{1i}$, $C_{2j}$, $C_{3k}$) auf eine Gesamtheit sogenannter "sekundärer" Ströme ($F_1$, $F_2$, $F_3$) einer Anzahl, die gleich der Anzahl der Primärströme ist, wobei jeder der Sekundärströme durch zeitliches Multiplexieren der Sektionen, die sequentiell und zyklisch in jedem der Primärströme ($CH_1$, $CH_2$, $CH_3$) abgegriffen werden, erhalten wird; und
    - Mittel (14) zum Aussenden der Sekundärströme ($F_1$, $F_2$, $F_3$) zu dem Ziel (20).

8. Vorrichtung zum Verarbeiten wenigstens eines sogenannten "primären" Datenstroms ($CH_1$), **dadurch gekennzeichnet, dass** sie Mittel (25) zum Wiederherstellen des Primärstroms ($CH_1$) anhand einer Folge von Sektionen ($C_{1i}$) derselben Dauer ($T_{MUX}$), die durch zeitliches Demultiplexieren wenigstens zweier sogenannter "sekundärer" Datenströme ($F_1$, $F_2$, $F_3$), die zyklisch abgegriffen werden, extrahiert werden, umfasst.

**9.** Computerprogramm, das Befehle enthält, um die Schritte des Aussendeverfahrens nach Anspruch 1 oder 2 abzuarbeiten, wenn das Programm durch einen Computer (10) abgearbeitet wird.

**10.** Aufzeichnungsträger (12), der durch einen Computer (10) lesbar ist und auf den ein Computerprogramm aufgezeichnet ist, das Befehle enthält, um die Schritte des Aussendeverfahrens nach Anspruch 1 oder 2 abzuarbeiten.

**11.** Computerprogramm, das Befehle enthält, um die Schritte des Verarbeitungsverfahrens nach einem der Ansprüche 3 bis 6 abzuarbeiten, wenn das Programm durch einen Computer (20) abgearbeitet wird.

**12.** Aufzeichnungsträger (22), der durch einen Computer (20) lesbar ist und auf dem ein Computerprogramm aufgezeichnet ist, das Befehle enthält, um die Schritte des Verarbeitungsverfahrens nach einem der Ansprüche 3 bis 6 abzuarbeiten.

**Claims**

**1.** Method for broadcasting at least two data streams ($CH_1$, $CH_2$, $CH_3$), called "primary streams", in a telecommunications network between a source (10) and at least one destination (20), **characterized in that** it has:

- a step (E20) of temporal division of each of said primary streams ($CH_1$, $CH_2$, $CH_3$) into a plurality of sections ($C_{11}$, $C_{2j}$, $C_{3k}$) of the same duration ($T_{MUX}$) by said source (10);
- a step (E30) of distribution of all said sections ($C_{11}$, $C_2j$, $C_{3k}$) in a set of streams called "secondary streams" ($F_1$, $F_2$, $F_3$) in a number equal to the number of said primary streams, each of said secondary streams being obtained by virtue of time-division multiplexing of said sections taken sequentially and cyclically in each of said primary streams ($CH_1$, $CH_2$, $CH_3$) ; and
- a step (E40) of broadcast of said secondary streams ($F_1$, $F_2$, $F_3$) to said destination (20).

**2.** Broadcast method according to Claim 1, **characterized in that** said duration ($T_{MUX}$) is not shorter than a time for processing successive requests to subscribe to and unsubscribe from a broadcast group for one of said secondary streams by a device of the network connected in series with said data streams.

**3.** Method for processing at least one data stream called a "primary data stream" ($CH_1$), **characterized in that** it has a prior step (F40) of reconstruction of said primary stream ($CH_1$) from a sequence of sections ($C_{11}$) of the same duration ($T_{MUX}$) that are extracted (F30) by virtue of time-division demultiplexing of at least two data streams called "secondary data streams" ($F_1$, $F_2$, $F_3$) taken cyclically.

**4.** Processing method according to Claim 3, **characterized in that** said sections ($C_{11}$) are extracted (F30) periodically from said secondary streams ($F_1$, $F_2$, $F_3$).

**5.** Processing method according to one of Claims 3 and 4, **characterized in that** said primary stream is an audiovisual program and **in that** said processing (F80-F100) consists in reproducing this program on an appropriate device.

**6.** Processing method according to one of Claim 5, **characterized in that** it has:

- prior to each extraction (F30) of a section from a secondary stream ($F_1$, $F_2$, $F_3$), a step (F10) of subscribing to a broadcast group for this stream in a telecommunications network and a step (F20) of reception of this stream; and
- after said extraction (F30), a step (F40) of unsubscribing from said broadcast group.

**7.** Device for broadcasting at least two data streams ($CH_1$, $CH_2$, $CH_3$), called "primary streams", in a telecommunications network to at least one destination (20), **characterized in that** it has:

- means (15) for temporally dividing each of said primary streams ($CH_1$, $CH_2$, $CH_3$) into a plurality of sections ($C_{11}$, $C_{2j}$, $C_{3k}$) of the same duration ($T_{MUX}$);
- means (15) for distributing all said sections ($C_{11}$, $C_{2j}$, $C_{3k}$) in a set of streams called "secondary streams" ($F_1$, $F_2$, $F_3$) in a number equal to the number of said primary streams, each of said secondary streams being obtained by virtue of time-division multiplexing of said sections taken sequentially and cyclically in each of said primary streams ($CH_1$, $CH_2$, $CH_3$); and
- means (14) for broadcasting said secondary streams ($F_1$, $F_2$, $F_3$) to said destination (20).

**8.** Device for processing at least one data stream called a "primary data stream" ($CH_1$), **characterized in that** it has means (25) for reconstructing said primary stream ($CH_1$) from a sequence of sections ($C_{11}$) of the same duration ($T_{MUX}$) that are extracted by means of time-division demultiplexing of at least two data streams called "secondary data streams" ($F_1$, $F_2$, $F_3$) taken cyclically.

9. Computer program having instructions for executing the steps of the broadcast method according to Claim 1 or 2 when said program is executed by a computer (10).

10. Recording medium (12), readable by a computer (10), on which is recorded a computer program comprising instructions for executing the steps of the broadcast method according to Claim 1 or 2.

11. Computer program having instructions for executing the steps of the processing method according to any one of Claims 3 to 6 when said program is executed by a computer (20).

12. Recording medium (22), readable by a computer (20), on which is recorded a computer program comprising instructions for executing the steps of the processing method according to any one of Claims 3 to 6.

EP 2 140 614 B1

**ART ANTERIEUR**
**FIG. 1**

**ART ANTERIEUR**
**FIG. 2**

11

**FIG. 3**

**FIG. 4**

**FIG. 5**

**FIG. 6**

**FIG. 9**

**FIG. 7**

**FIG. 8**

**EP 2 140 614 B1**

## RÉFÉRENCES CITÉES DANS LA DESCRIPTION

**Documents brevets cités dans la description**

- US 20030053476 A1